Europäisches Patentamt

European Patent Office

Office européen des brevets

(11) Veröffentlichungsnummer: **0 186 808**
**B1**

(12) **EUROPÄISCHE PATENTSCHRIFT**

(45) Veröffentlichungstag der Patentschrift: **08.08.90**

(51) Int. Cl.⁵: **C 03 C 17/02**

(21) Anmeldenummer: **85115511.9**

(22) Anmeldetag: **06.12.85**

(54) **Verfahren zur Herstellung einer lichtdurchlässigen, festen Brandschutzchicht.**

(30) Priorität: **19.12.84 DE 3446202**

(43) Veröffentlichungstag der Anmeldung:
**09.07.86 Patentblatt 86/28**

(45) Bekanntmachung des Hinweises auf die
Patenterteilung:
**08.08.90 Patentblatt 90/32**

(84) Benannte Vertragsstaaten:
**AT BE CH DE FR GB IT LI LU NL SE**

(56) Entgegenhaltungen:
FR-A-2 452 944
GB-A-2 047 164
GB-A-2 155 852

Die Akte enthält technische Angaben, die nach
dem Eingang der Anmeldung eingereicht
wurden und die nicht in dieser Patentschrift
enthalten sind.

(73) Patentinhaber: **FLACHGLAS
AKTIENGESELLSCHAFT
Otto-Seeling-Promenade 10-14
D-8510 Fürth (DE)**

(72) Erfinder: **Nolte, Hans-Henning, Dipl.-Phys.
Beethovenstrasse 29
D-4650 Gelsenkirchen (DE)**
Erfinder: **Zernial, Wolfgang, Dr. Dipl.-Phys.
Lortzingstrasse 1
D-4650 Gelsenkirchen (DE)**

(74) Vertreter: **Andrejewski, Walter et al
Patentanwälte Dipl.-Phys. Dr. Walter
Andrejewski Dipl.-Ing. Dr.-Ing. Manfred Honke
Dipl.-Phys. Dr. Karl Gerhard Masch Theaterplatz
3, Postfach 10 02 54
D-4300 Essen 1 (DE)**

Courier Press, Leamington Spa, England.

EP 0 186 808 B1

**Beschreibung**

Die Erfindung betrifft ein Verfahren zur Herstellung einer lichtdurchlässigen, festen Brandschutzschicht aus einem blähbaren Material, wobei auf ein Substrat eine Beschichtung aus einem in Wasser gelösten hydratisierten Alkalimetallsilikat aufgebracht wird und wobei diese Beschichtung auf dem Substrat in der Trocknungsatmosphäre einer Trocknungskammer bei einer Temperatur von etwa 100°C getrocknet wird. Die Beschichtung kann Hilfsstoffe aufweisen. Der Ausdruck Brandschutzschicht wird verwendet, obgleich die fest Beschichtung auch plattenförmigen Charakter haben kann. Das Substrat kann eine Glasscheibe sein, kann aber auch als Folie ausgebildet sein. Die feste Brandschutzschicht bleibt bei der Weiterverarbeitung auf dem Substrat oder wird im Zuge der Weiterverarbeitung zu einer Brandschutzwand bzw. einem Brandschutzwandbauteil von dem Substrat abgenommen. Hilfsstoffe sind z.B. Harnstoffe, mehrwertige Alkohole, Saccharide, Natriumphosphat, Natriumaluminat, Aluminiumphosphat, Borax, Borsäure, u.a.

An Brandschutzschichten des beschriebenen Aufbaus werden hohe Anforderungen gestellt. Sie dürfen ohne Brandeinwirkung keine Blasen oder Mikroblasen zeigen und müssen auch unter der Einwirkung von Sonnenstrahlen eine hohe Alterungsbeständigkeit aufweisen.

Bei einem bekannten Verfahren zur Herstellung einer solchen Brandschutzschicht (EP—A 01 00 001) enthält die Trocknungsatmosphäre mindestens 30 Vol.-% Sauerstoff und insgesamt maximal 15 Vol.-% eines der Gase Argon, Stickstoff, Schwefelhexafluorid oder Mischungen der vorstehend aufgeführten Gase sowie im Rest Wasserdampf und/oder Helium. Das hat sich bewährt. Die Alterungsbeständigkeit ist jedoch, insbesondere bei Einwirkung von Licht- und Sonnenstrahlen, verbesserungsbedürftig. Es ist fernerhin bekannt (GB—A 20 47 164), die Trocknung der Beschichtung in Gegenwart einer Trocknungsatmosphäre, die Sauerstoff, Wasserdampf und Stickstoff enthält oder aus Wasserdampf und Schwefelhexafluorid besteht, vorzunehmen. Dabei handelt es sich um die Herstellung eines Laminates aus zwei Abdeckungen und einer Zwischenschicht, wobei vor dem Aufbringen der Abdeckung eine Atmosphäre erzeugt wird, welche zumindest teilweise aus einer oder mehreren Substanzen besteht, welche in der Beschichtung lösbarer sind als Luft.

Der Erfindung liegt die Aufgabe zugrunde, das eingangs beschriebene Verahren so zu führen, daß die Brandschutzschicht eine besonders hohe Alterungsbeständigkeit, insbesondere unter der Einwirkung von Licht- und Sonnenstrahlen, aufweist. Das erfindungsgemäße Verfahren zur Herstellung einer lichtdurchlässigen, festen Brandschutzschicht aus blähbaren Material besteht zur Lösung dieser Aufgabe aus den Verfahrensschritten.

a) auf eine Substrat, z.B. auf eine Glasscheibe, wird eine Schicht aus einem in Wasser gelösten hydratisierten Alkalimetallsilikat aufgebracht,

b) das beschichtete Substrat wird in eine Trocknungskammer eingebracht,

c) die Trocknungskammer wird mit Wasserdampf gefüllt,

d) ein Teil des Wasserdampfes wird auskondensiert,

e) nach Maßgabe des auskondensierten Volumens an Wasserdampf werden ein Gas der Gruppe "Helium, Wasserstoff" oder Mischungen davon in die Trocknungskammer so wieder eingeführt, daß der Gehalt an Wasserdampf zzgl. einem der vorgenannten Gase oder Mischungen davon in der Atmosphäre der Trocknungskammer zumindest 90 Vol.-% beträgt,

f) die Atmosphäre in der Trocknungskammer kann im Rest Stickstoff und/oder Argon und/oder Schwefelhexafluorid aufweisen,

g) die Trocknung erfolgt bei etwa 100°C.

Vorzugsweise wird der Stickstoffgehalt in der Atmosphäre der Trocknungskammer auf maximal 8 Vol.-% eingestellt.

Die Erfindung nutzt die Erkenntnis, daß der Trocknungsvorgang zu besonders alterungsbeständigen Brandschutzschichten führt, wenn die Trocknungskammer zuerst mit Wasserdampf gefüllt wird, so daß der Trocknungsvorgang vorsichtig eingeleitet wird, und wenn danach wie beschrieben weiterverfahren wird, wobei gleichzeitig auf einfache Weise eine Dosierung der erfindungsgemäß einzusetzenden Bestandteile der Trocknungsatmosphäre erreicht wird. Es versteht sich, daß beim Trocknen fortwährend Wasserdampf aus der zu trocknenden Brandschutzschicht frei wird. Die Beigabe von Argon und/oder Schwefelhexafluorid erfolgt aus Stabilisierungsgründen.

Die erreichten Vorteile sind darin zu sehen, daß erfindungsgemäß eine Brandschutzschicht erhalten wird, die sich durch hohe Alterungsbeständigkeit auszeichnet, und zwar auch unter der Einwirkung von Licht- und Sonnenstrahlen.

**Patentansprüche**

1. Verfahren zur Herstellung einer lichtdurchlässigen, festen Brandschutzschicht aus einem blähbaren Material:

a) auf eine Substrat, z.B. auf eine Glasscheibe, wird eine Schicht aus einem in Wasser gelösten hydratisierten Alkalimetallsilikat aufgebracht,

b) das beschichtete Substrat wird in eine Trocknungskammer eingebracht,

c) die Trocknungskammer wird mit Wasserdampf gefüllt,

d) ein Teil des Wasserdampfes wird auskondensiert,

e) nach Maßgabe des auskondensierten Volumens an Wasserdampf werden ein Gas der Gruppe "Helium, Wasserstoff" oder Mischungen davon in die Trocknungskammer so wieder eingeführt, daß der Gehalt an Wasserdampf zuzüglich einem der vorgenannten Gase oder Mischungen davon in der Atmosphäre der Trocknungskammer zumindest 90 Vol.-% beträgt,

f) die Atmosphäre in der Trocknungskammer kann im Rest Stickstoff und/oder Argon und/oder Schwefelhexafluorid aufweisen,

g) die Trocknung erfolgt bei etwa 100°C.

2. Verfahren nach Anspruch 1, wobei der Stickstoffgehalt in die Atmosphäre der Trocknungskammer auf maximal 8 Vol.-% eingestellt ist.

**Revendications**

1. Procédé pour fabriquer une couche transparente solide de protection contre le feu, constituée par un matériau pouvant gonfler, selon lequel:

a) on dépose sur un substrat, par exmple une plaque de verre, une couche d'un silicate hydraté d'un métal alcalin, dissous dans l'eau,

b) on introduit le substrat ainsie recouvert dans une chambre de séchage,

c) on remplit de vapeur la chambre de séchage,

d) on condense une partie de la vapeur d'eau,

e) en fonction du volume de vapeur d'eau condensée, on introduit à nouveau un gaz groupe "hélium, hydrogène" ou des mélanges de ces gaz dans la chambre de séchage de manière que le pourcentage de la vapeur d'eau plus un des gaz ou des mélanges indiqués précédemment soit égal au moins à 90% en volume dans l'atmosphère de la chambre de séchage,

f) la reste de l'atmosphère dans le chambre de séchage peut contenir de l'azote et/ou de l'argon et/ou de l'hexafluorure de soufre,

g) le séchage est réalisé à environ 100°C.

2. Procédé selon la revendication 1, selon lequel on règle la teneur en azote dans l'atmosphère de la chambre de séchage au maximum à 8% en volume.

**Claims**

1. A process for the manufacture of a transparent solid fire-protection layer of a foamable material;

(a) a layer of a hydrated silicate of an alkali metal dissolved in water is applied to a substrate, e.g. to a pane of glass,

(b) the coated substrate is introduced into a drying chamber,

(c) the drying chamber is filled with water vapour,

(d) a portion of the water vapour is condensed,

(e) in proportion to the condensed volume of water vapour a gas of the "helium, hydrogen" group or mixtures thereof is introduced into the drying chamber so that the content in the atmosphere of the drying chamber of water vapour together with one of the above-named gases or mixtures thereof amounts to at least 90% by volume,

(f) the remainder of the atmosphere in the drying chamber can be nitrogen and/or argon and/or sulphur hexafluoride,

(g) the drying takes place at about 100°C.

2. A process according to Claim 1 in which the nitrogen content of the amtosphere in the drying chamber is adjusted to a maximum of 8% by volume.